# EUROPÄISCHE PATENTSCHRIFT

(11) **EP 1 418 215 B1**
(45) Veröffentlichungstag und Bekanntmachung des Hinweises auf die Patenterteilung: **24.12.2008**
(21) Anmeldenummer: 03023420.7
(22) Anmeldetag: 17.10.2003
(51) Int. Cl.: C09J 153/02, C08L 53/02, C08F 8/04

(54) **Verwendung einer Klebemasse für einen Haftklebfolienstreifen**
Use of an adhesive composition in a pressure sensitive adhesive tape
Utilisation d'une compositon adhésive dans une bande adhesive sensible a la pression

(30) Priorität: 08.11.2002 DE 10252089
(43) Veröffentlichungstag der Anmeldung: 12.05.2004
(73) Patentinhaber: tesa AG, 20253 Hamburg (DE)
(72) Erfinder: Krawinkel, Thorsten, Dr., 22457 Hamburg (DE)

(56) Entgegenhaltungen:
- CA-A- 2 396 983

## Beschreibung

Die Erfindung betrifft die Verwendung einer Klebemasse in einem Haftklebfoliensireifen, der hoch alterungsstabil ist auf der Basis von Styrolblockcopolymeren und der zur Schaffung einer durch dehnende Verstreckung in Richtung der Verklebungsebene wieder lösbare Verbindung eingesetzt werden kann.

Elastisch oder plastisch hochdehnbare Selbstklebebänder, welche sich durch dehnendes Verstrecken in der Verklebungsebene rückstands- und zerstörungsfrei wieder ablösen lassen, sind beispielsweise aus der US 4,024,312 A, DE 33 31 016 C2, WO 92/11332 A1, WO 92/11333 A1, DE 42 22 849 C1, WO 95/06691 A1, DE 195 31 696 A1, DE 196 26 870 A1, DE 196 49 727 A1, DE 196 49 728 A1, DE 196 49 729 A1, DE 197 08 364 A1, DE 197 20 145 A1, DE 198 20 858 A1, WO 99/37729 A1 und DE 100 03 318 A1 bekannt und werden nachfolgend auch als stripfähige Selbstklebebänder bezeichnet.

Eingesetzt werden solche stripfähigen Selbstklebebänder häufig in Form von ein- oder beidseitig haftklebrigen Klebfolienstreifen, die bevorzugt einen nicht haftklebrigen Anfassbereich aufweisen, von welchem aus der Ablöseprozess eingeleitet wird. Besondere Anwendungen entsprechender Selbstklebebänder finden sich unter anderem in DE 42 33 872 C1, DE 195 11 288 C1, US 5,507,464 A, US 5,672,402 A und WO 94/21157 A1. Spezielle Ausführungsformen sind auch in der DE 44 28 587 C1, DE 44 31 914 C1, WO 97/07172 A1, DE 196 27 400 A1, WO 98/03601 A1 und DE 196 49 636 A1, DE 197 20 526 A1, DE 197 23 177 A1, DE 197 23 198 A1, DE 197 26 375 A1, DE 197 56 084 C1, DE 197 56 816 C1, DE 198 42 864 A1, DE 198 42 865 A1, WO 99/31193 A1, WO 99/37729 A1, WO 99/63018 A1, WO 00/12644 A1 und DE 199 38 693 A1 beschrieben.

Bevorzugte Einsatzgebiete vorgenannter stripfähiger Klebfolienstreifen beinhalten insbesondere die rückstands- und zerstörungsfrei wieder ablösbare Fixierung leichter bis mittelschwerer Gegenstände im Wohn-, Arbeits- und Bürobereich. Sie ersetzen hierbei klassische Befestigungsmittel wie zum Beispiel Stecknadeln, Pin-Nadeln, Heftzwecken, Nägel, Schrauben, klassische Selbstklebebänder und Flüssigklebstoffe. Wesentlich für den erfolgreichen Einsatz der oben genannten Klebfolienstreifen ist neben der Möglichkeit des rückstands- und zerstörungsfreien Wiederablösens verklebter Gegenstände deren einfache und schnelle Verklebung sowie für die vorgesehene Verklebungsdauer deren sicherer Halt. Hierbei ist insbesondere zu berücksichtigen, dass die Funktionsfähigkeit der Klebestreifen auf einer Vielzahl von Substraten gegeben sein muss, um als Universalfixierung im Wohn-, Arbeits- und Bürobereich dienen zu können.

Obwohl in der oben zitierten Literatur eine breite Palette von Haftklebemassen für die Verwendung in stripfähigen Selbstklebebändern beschrieben werden, weisen aktuell im Markt befindliche Handelsprodukte (zum Beispiel tesa® Powerstrips® der tesa AG, 3M Command® Adhesive Klebstreifen der Firma 3M sowie Plastofix® Formuli Force 1000 Klebestreifen der Firma Plasto S.A.) sämtlich Haftklebemassen auf Basis von Styrolblockcopolymeren auf.
Typischerweise finden lineare oder radiale Blockcopolymere auf Basis von Polystyrolblöcken und Polybutadienblöcken und/oder Polyisoprenblöcken Verwendung, also zum Beispiel radiale Styrol-Butadien-(SB)ₙ und/oder lineare Styrol-Butadien-Styrol (SBS)-und/oder lineare Styrol-Isopren-Styrolblockcopolymere (SIS). Vorteile der vorgenannten styrolblockcopolymerbasierenden Haftklebemassen für den Einsatz in stripfähigen Selbstklebebändern sind zum Beispiel die mit ihnen erreichbaren sehr hohen Verklebungsfestigkeiten (bedingt unter anderem durch die gleichzeitige Realisierung einer sehr hohen Kohäsion und sehr hoher Klebkräfte), eine ausgeprägte Reduzierung der Haftklebrigkeit beim verstreckenden Ablösen (welches den Ablöseprozess deutlich erleichtert oder gar erst ermöglicht) sowie eine sehr hohe Zugfestigkeit, die insbesondere für einen reißerfreien Ablöseprozess wesentlich ist.

Ein Nachteil der meisten im Markt erhältlichen Produkte mit Haftklebemassen auf Basis oben genannter Styrolblockcopolymere ist ihre geringe Alterungsstabilität, insbesondere ihre geringe UV-Stabilität. Diese ist wesentlich durch den Einsatz von Styrolblockcopolymeren mit im Elastomerblock ungesättigten Polydienblöcken (Polybutadien, Polyisopren) verursacht. Wohl lassen sich den verwendeten Haftklebemassen Alterungsschutzmittel in Form von zum Beispiel primären Antioxidanzien, sekundären Antioxidanzien, C-Radikalfängern, Lichtschutzmitteln wie zum Beispiel UV-Absorbern, sterisch gehinderten Aminen oder die schädigende elektromagnetische Strahlung reflektierende oder streuende Additive, zum Beispiel in Form von Füllstoffen und/oder Farbpigmenten, zusetzen, jedoch bewirken entsprechende Zusätze zumeist nur eine graduelle Verbesserung der Alterungsstabilität, so dass Alterungsprozesse lediglich für eine begrenzte Zeit herausgezögert werden.
Im Vergleich zu Polymeren auf Basis ungesättigter Kohlenwasserstoffe bleibt die erreichte Alterungsstabilität, insbesondere die realisierte UV-Stabilität jedoch gering. Zum Beispiel verkleben oben genannte im Handel erhältliche Selbstklebestreifen bei Fixierung auf Fensterglas nach schon wenigen Wochen Sonnenlichtexposition derartig stark mit der Glasoberfläche, dass ein rückstandsfreies Wiederablösen durch dehnendes Verstrecken nicht mehr möglich ist.
Demgemäss wird empfohlen, den tesa® Powerstrips® nicht auf Fensterscheiben zu verkleben, weil die Wiederablösbarkeit des Powerstrips® durch Sonneneinstrahlung beeinträchtigt wird. Der japanischen Verpackungsinformation der Klebestreifen "Command® Adhesive" kann entnommen werden, dass Fensterscheiben, die dem Sonnenlicht ausgesetzt sind, als Untergrund nicht geeignet sind.

Eine Möglichkeit zur Erhöhung der Alterungsbeständigkeit und insbesondere der UV-Stabilität bei Nutzung von Styrolblockcopolymeren besteht im Einsatz von im Elastomerblock hydrierten Styrolblockcopolymeren, wie es zum Beispiel in Styrol-Ethylen/Butylen-Styrol- (SEBS; erhalten durch Hydrierung von SBS) und/oder Styrol-Ethylen/Propylen-Styrol- (SEPS; erhalten durch Hydrierung von SIS) Blockcopolymeren verwirklicht ist.
Nachteil des Einsatzes entsprechender im Elastomerblock hydrierter Styrolblockcopolymere ist jedoch, dass die mit selbigen zu realisierenden Verklebungsfestigkeiten erfahrungsgemäß deutlich unterhalb derer liegen, welche mit den analogen nicht im Elastomerblock hydrierten Styrol-Butadien-Styrol- und Styrol-Isopren-Styrol-Blockcopolymeren erreicht werden. Dies gilt insbesondere dann, wenn in den zum Einsatz kommenden Klebstoffformulierungen die Zugabe von Plastifizierungsmitteln wie Flüssigharzen, Weichmacherölen, niedermolekularen flüssigen Polyolefinen und ähnlichem gering gehalten oder gänzlich auf diese Materialien verzichtet werden muss. Dies kann unter anderem dann der Fall sein, wenn die vorgenannten Klebmassebestandteile die Neigung besitzen, aus der Haftklebemasse heraus in die verklebten Substrate zu migrieren und diese irreversibel zu verändern, ein Verhalten, welches gerade für Klebestreifen, die für das rückstands- und zerstörungsfreie Wiederablösen von Verklebungen konzipiert sind, nicht akzeptabel ist.

Ein weiterer Nachteil der Verwendung von Haftklebemassen auf Basis von im Elastomerblock ungesättigten Styrolblockcopolymeren ist die Tatsache, dass diese zur Verbesserung ihrer UV-Stabilität und/oder zur Maskierung von Farbstichen, die zum Beispiel durch die verwendeten Klebharze verursacht sein können, häufig pigmentiert werden. Typische Pigmente, die die UV-Stabilität verbessern und der Haftklebemasse gleichfalls ein neutrales weißes oder gezielt farbiges Erscheinungsbild geben, umfassen zum Beispiel unterschiedliche Titandioxide oder anorganische und organische Farbpigmente.
Nachteilig an entsprechenden Pigmentierungen ist, dass die mit ihnen ausgerüsteten Haftklebemassen im allgemeinen keine optische Transparenz und keine Farblosigkeit besitzen. Als Konsequenz der Pigmentierung der Haftklebemasse ergibt sich zum Beispiel ein deutlich sichtbarer Anfasserbereich, welcher häufig vom Anwender infolge seines Herausstehens aus der Klebfuge als optisch störend empfunden wird, oder auch ein durch die Pigmentierung in seiner gesamten Fläche sichtbarer Haftklebestreifen, welcher zum Beispiel bei der Fixierung transparenter Substrate als optisch störend wahrgenommen wird.

Ein weiterer Nachteil nicht transparenter Klebestreifen ist die fehlende Möglichkeit bei Verklebung eines oder zweier transparenter Verklebungspartner die makroskopisch erreichte Verklebungsfläche durch beide Klebschichten hindurch leicht optisch detektieren zu können, die gerade im Fall kritischer Verklebungen eine wichtige Aussage zur Qualität der erreichten Verklebungsgüte ist.

Zahlreiche Ansätze sind verfolgt worden, um eine Unsichtbarkeit des zum Ablösen durch dehnendes Verstrecken benötigten nicht haftklebrigen Anfasserbereiches zu erreichen. So beschreibt etwa die WO 98/03601 A1 einen stripfähigen Klebestreifen, der an einem Klebestreifenende eine etwa mittig in die Klebmasseschicht integrierte Kunststofffolie, zum Beispiel eine Polyesterfolie, enthält. Im Bereich der integrierten Kunststofffolie ist die Klebstoffoberfläche beidseitig nicht haftklebrig eingestellt, etwa durch Aufkaschieren weiterer Kunststofffolien oder mittels Lackierung. US 5,925,459 A beschreibt die Verwendung eines durch dehnendes Verstrecken wiederablösbaren Selbstklebestreifens, welcher eine transparente elastische Kunststofffolie als Zwischenträger nutzt. Durch ihren elastischen Charakter vermag sich die Zwischenträgerfolie beim Ablöseprozess der Deformation der Haftklebemasse anzupassen. Nicht mit Haftklebemasse beschichtete Bereiche der Zwischenträgerfolie dienen als nicht haftklebrige transparente Anfasserbereiche, von denen aus der Ablöseprozess durchgeführt werden kann.

Zahlreiche der oben genannten Dokumente beinhalten die Verwendung von Haftklebemassen, die im allgemeinen eine hohe Transparenz und gleichzeitig eine hohe Alterungsstabilität, insbesondere eine sehr hohe UV-Stabilität aufweisen. So offenbaren zum Beispiel die WO 92/11332 A1, WO 92/11333 A1 und die DE 195 31 696 A1 die Verwendung von Haftklebemassen auf Basis von Acrylatcopolymeren. Von selbigen ist jedoch bekannt, dass die mit ihnen im allgemeinen zu realisierenden Verklebungsfestigkeiten sowie insbesondere die erreichbaren Höchstzugkräfte deutlich unterhalb der Werte liegen, die mit styrolblockcopolymerbasierenden Haftklebemassen zu realisieren sind. Damit scheiden entsprechende Haftklebemassen insbesondere bei der Nutzung in einschichtigen stripfähigen Selbstklebebändern vollständig aus, da in diesem Fall sehr hohe Höchstzugkräfte für einen sicheren Ablöseprozess unabdingbar sind.

DE 42 22 849 C1, DE 197 08 366 A1, DE 196 49 727 A1, DE 196 49 728 A1 und DE 196 49 729 A1 beschreiben die Nutzung von Styrolblockcopolymeren auf Basis von SEBS und/oder SEPS, mithin die Nutzung von im Elastomerblock chemisch gesättigten Styrolblockcopolymeren. Jedoch lassen sich erfahrungsgemäß mit herkömmlichen Styrolblockcopolymeren auf Basis von SEBS und/oder SEPS keine Haftklebemassen erzeugen, die gleichzeitig über eine hohe Zugfestigkeit, ausgezeichnete Schälfestigkeiten, hohe Kippscherfestigkeiten und niedrige Ablösekräfte (Stripkräfte) verfügen.

Eine transparente UV-stabile Klebmasse mit erhöhter Verklebungsfestigkeit, die für den Einsatz in stripfähigen Klebfolienstreifen geeignet ist, ist in DE 100 03 318 A1 beschrieben.
Durch den Einsatz eines speziellen Styrolblockcopolymers auf Basis eines hydrierten Mittelblocks, der nicht-hydrierte polymere Seitenketten enthält, können Klebmassen für stripfähige Klebfolienstreifen hergestellt werden.

Für eine Verklebung von schwereren Gegenständen wie Haken für Handtücher oder Textilien sind oben beschriebene Klebmassen allerdings nicht geeignet, da die Klebleistung zwar gegenüber Klebmassen aus SEBS oder SEPS deutlich erhöht ist, aber noch erheblich unter der Verklebungsleitung von Klebmassen auf der Basis von SIS oder SBS liegt.

Ziel der Erfindung ist es daher, eine Klebemasse für einen Haftklebestreifen zu schaffen, der sowohl UV-stabil ist und eine höhere Klebleistung aufweist als bisherige insbesondere transparente UV-stabile stripfähige Systeme und der möglichst transparent ist.

Die Aufgabe wird mit der Verwendung einer Klebemasse in einem Haftklebfollenstreifen erfindungsgemäß gelöst, wie sie im Hauptanspruch niedergelegt ist. Gegenstand der Unteransprüche sind dabei vorteilhafte Weiterbildungen der Erfindung.

Erfindungsgemäß erreicht wird dies durch Klebemassen, die auf Styrolblockcopolymergemischen basieren und die zur Herstellung von Haltklebfolienstreifen eingesetzt werden.

Demgemäß betrifft die Erfindung die Verwendung einer Klebemasse in einem Haftklebfolienstreifen aus mindestens einer Schicht, der sich durch dehnendes Verstrecken im wesentlichen in der Verklebungsebene rückstands- und zerstörungsfrei wieder ablösen lässt, wobei die Klebmasse besteht aus
- mindestens einem Blockcopolymer mit ein oder zwei endständigen Blöcken, bestehend aus Vinylaromaten, und
- einem Block bestehend aus einem konjugierten Dien, bei dem der Anteil an 1,2-verknüpftem Dien selektiv hydriert ist.

In einer ersten vorteilhaften Ausführungsform weisen die Blockcopolymere einen Polyvinylaromatenanteil von 10 Gew.-% bis 35 Gew.-%, bevorzugt zwischen 15 Gew.-% und 32 Gew.-%, auf.

In einer weiteren vorteilhaften Ausführungsform beträgt der Anteil des Styrolblockcopolymers bezogen auf die gesamte Klebmasse 20 bis 70 Gew.-%, bevorzugt 30 bis 60 Gew.-%, ganz besonders bevorzugt 35 bis 55 Gew.-%.

Haftklebemassen auf Basis vorgenannter Polymere werden durch Abmischung mit Klebharzen sowie optional weiteren Additiven wie zum Beispiel Antioxidantien, Prozessstabilisatoren, Lichtschutzmitteln, Verarbeitungshitfsmitteln sowie gegebenenfalls weiteren Polymeren, bevorzugt weiteren Elastomeren erhalten. Plastifizierungsmittel, wie zum Beispiel Flüssigharze, Weichmacheröle oder niedermolekulare flüssige Polymere, sind lediglich in sehr geringen Mengen von < ca. 5 Gew.-% eingesetzt, bevorzugt wird auf ihre Verwendung vollständig verzichtet.

Die Haftklebemassen basieren auf dem Einsatz ausgewählter spezieller Blockcopolymere. Die Haftklebrigkeit der Polymerengemische wird durch Zugabe von mit der Elastomerphase mischbaren Klebharzen erreicht. Als weitere Abmischkomponenten können unter anderem Weichmacher, Alterungsschutzmittel, Verarbeitungshilfsmittel, Füllstoffe, Farbstoffe, optische Aufheller, Stabilisatoren, Endblockverstärkerharze, sowie gegebenenfalls weitere Polymere, die bevorzugt elastomerer Natur sind, genutzt werden.

### Styrolblockcopolymergemische

Bei der Herstellung von Blockcopolymeren auf der Basis von Vinylaromaten, bevorzugt Styrol und 1,3-Dienen, besonders Isopren und Butadien, werden im Dienblock sowohl 1,2- als auch 1,4-verknüpfte Diene eingebaut. Der Anteil an 1,2-Dienen kann durch das Lösungsmittel, die Temperatur oder den Katalysator gesteuert werden. Da die 1,2-verknüpften Diene eine endständige Doppelbindung enthalten, während die Doppelbindung bei den 1,4-verknüpften Dienen in der Hauptkette liegt, ist eine selektive Hydrierung der endständigen und damit reaktiveren Doppelbindungen möglich.

Die Styrolblockcopolymergemische enthalten mindestens ein Blockcopolymer mit ein oder zwei endständigen Blöcken, bestehend aus Vinylaromaten, und einem Block bestehend aus einem konjugierten Dien, bei dem der Anteil an 1,2-verknüpftem Dien selektiv hydriert ist.

Vorzugsweise handelt es sich bei den Vinylaromaten um insbesondere teilhydrierte Styrol-Isopren-Styrol-Blockcopolymere, Styrol-Butadien-Styrol-Blockcopolymere oder einer Mischung aus beiden.

In einer weiteren vorteilhaften Ausführungsform besitzen die Blockcopolymere Polystyrolendblöcke.

Erfindungsgemäß nutzbar sind des weiteren funktionalisierte Blockcopolymere, wie zum Beispiel maleinsäureanhydridmodifizierte, silanmodifizierte oder epoxidierte Blockcopolymere.

Die oben beschriebenen Blockcopolymere können des weiteren mit anderen Blockcopolymeren abgemischt werden. Wegen der zu erreichenden UV-Stabilität sollten zur Abmischung insbesondere solche auf Basis von hydrierten Elastomeren besonders von hydrierten Blockcopolymeren, wie Poly-Styrol-Ethylen/Butylen-Styrol- oder Poly-Styrol-Ethylen/Propylen-Styrol-Blockcopolymere zum Einsatz kommen.
Die UV-Stabilität von Klebmassen auf Basis nicht hydrierter Blockcopolymere (SIS oder SBS) kann durch eine Abmischung der oben beschriebenen teilhydrierten Blockcopolymere deutlich verbessert werden.

Die oben beschriebenen teilhydrierten Blockcopolymere haben gegenüber den im Elastomerteil vollständig hydrierten Blockcopolymeren den Vorteil mit einer größeren Anzahl von Harzen verträglich zu sein. Dagegen ist die Alterungsbeständigkeit nur geringfügig schlechter, aber deutlich gegenüber den nichthydrierten Blockcopolymeren verbessert. Die Klebleistung ist durch die noch vorhandenen Doppelbindungen in den teilhydrierten Elastomeren deutlich gegenüber Systemen mit im Elastomerteil vollständig hydrierten Blockcopolymeren verbessert, so dass annähernd Verklebungsleistungen von Klebmassen mit nicht hydrierten Blockcopolymeren erreicht werden können.
Zudem ist die Dehnung der teilhydrierten Blockcopolymere gegenüber den vollständig hydrierten Systemen erhöht, so dass der Ablöseprozess dadurch verbessert wird.

Die Gesamtmenge an Blockcopolymeren in erfindungsgemäßen Formulierungen beträgt 27,5 Gew.-% bis 62,5 Gew.-%, bevorzugt 35 Gew.-% bis 57,5 Gew.-%, besonders bevorzugt 37.5 Gew.-% bis 55 Gew.-%.

Der Gehalt an Vinylaromaten liegt bevorzugt zwischen 10 Gew.-% und 35 Gew.-%, besonders bevorzugt zwischen 15 Gew.-% und 32 Gew.-%. Der Gehalt an Zweiblock kann zwischen 0 und 70 Gew.-% betragen.

### Klebrigmacher

Einzusetzende Klebharze können sowohl allein als auch im Gemisch verwendet werden werden.

Als Klebrigmacher nutzen die Haftklebemassen wegen der geforderten Farblosigkeit als Hauptkomponente insbesondere hydrierte Klebharze. Bevorzugt geeignet sind unter anderem:
- hydrierte Polymerisate des Dicyclopentadiens (zum Beispiel Escorez 5300er Serie; Exxon Chemicals)
- hydrierte Polymerisate von bevorzugt C-8 und C-9-Aromaten (zum Beispiel Regalite und Regalrez Serien; Eastman Chemicals // Arkon P Serie; Arakawa); diese können durch Hydrierung von Polymerisaten aus reinen Aromatenströmen oder durch Hydrierung von Polymerisaten von Gemischen unterschiedlichen Aromaten entstehen.
- teilhydrierte Polymerisate von C-8 und C-9-Aromaten (zum Beispiel Regalite und Regalrez Serien; Eastman Chemicals // Arkon M; Arakawa)
- hydrierte Polyterpenharze (zum Beispiel Clearon M; Yasuhara)
- hydrierte C-5/C9-Polymerisate (zum Beispiel ECR-373; Exxon Chemicals)
- aromatenmodiftzierte selektiv hydrierte Dicyclopentadienderivate (zum Beispiel Escorez 5600er Serie; Exxon Chemicals) sowie
- hydrierte und teilhydrierte kolophoniumbasierende Harze (zum Beispiel Foral, Foralyn; Eastman Chemicals // Hydrogral; DRT).

Die letzt genannten Klebharze können sowohl allein als auch im Gemisch eingesetzt werden.
- Nicht-hydrierte Klebharze, zum Beispiel C-5-, C-9-, C5/C9- Kohlenwasserstoffharze, Polyterpenharze, aromatenmodifizierte Polyterpenharze oder Kolophoniumderivate können in geringen Mengen in den Formulierungen enthalten sein. Ihre Gesamtkonzentration übersteigt jedoch typischerweise nicht 30 Gew.-%, bevorzugt nicht 20 Gew.-% der gesamten Klebmassebestandteile.

Wenn die Haftklebemassen ein wasserklar transparentes Erscheinungsbild aufweisen sollen, so sind Klebharze zu nutzen, die bei einer Einsatzkonzentration von 50 Gew.-% und einer Schichtstärke von 500 µm eine Eigenfarbe von 2,0, gemessen entsprechend der Gardner Farbskala, nicht überschreiten. In geringeren Mengen genutzte Klebharze können entsprechend ihrer Einsatzkonzentration auch Eigenfarben > Gardner 2,0 aufweisen.

Nach DIN ISO 4630 (1982-11) ist die Gardner-Farbzahl eine Farbzahl für die Kennzeichnung der Farbe von klaren Flüssigkeiten (zum Beispiel Bindemittel für Lacke und Beschichtungsstoffe). Sie wird ermittelt durch visuellen Vergleich der Farbe einer Probe in einem Glasrohr mit der Farbe von definierten Farbstandards. Die Farbe der Probe, die dem jeweiligen Farbstandard am nächsten kommt, wird als Gardner-Farbzahl bezeichnet. Als Bezugsstandards der Gardner-Farbskala dienen 18 Glas-Farbstandards mit jeweils definierten Normfarbwertanteilen und Lichtdurchlässigkeiten.

### Weitere Abmischkomponenten

Als weitere Additive können typischerweise genutzt werden:
- primäre Antioxidanzien, wie zum Beispiel sterisch gehinderte Phenole
- sekundäre Antioxidanzien, wie zum Beispiel Phosphite oder Thioether
- Prozessstabilisatoren, wie zum Beispiel C-Radikalfänger
- Lichtschutzmittel, wie zum Beispiel UV-Absorber oder sterisch gehinderte Amine
- Verarbeitungshilfsmittel
- Endblockerstärkerharze sowie
- gegebenenfalls weitere Polymere von bevorzugt elastomerer Natur; entsprechend nutzbare Elastomere beinhalten unter anderem solche auf Basis reiner Kohlenwasserstoffe, zum Beispiel ungesättigte Polydiene, wie natürliches oder synthetisch erzeugtes Polyisopren oder Polybutadien, chemisch im wesentlichen gesättigte Elastomere, wie zum Beispiel gesättigte Ethylen-Propylen-Copolymere, α-Olefincopolymere, Polyisobutylen, Butylkautschuk, Ethylen-Propylenkautschuk sowie chemisch funktionalisierte Kohlenwasserstoffe, wie zum Beispiel halogenhaltige, acrylathaltige oder vinyletherhaltige Polyolefine, um nur einige wenige zu nennen.

Plastifizierungsmittel, wie zum Beispiel Flüssigharze, Weichmacheröle oder niedermolekulare flüssige Polymere, wie zum Beispiel niedermolekulare Polybutene mit Molmassen < 1500 g/mol (Zahlenmittel), werden lediglich in sehr geringen Mengen von ≤ 5 Gew.-% eingesetzt, bevorzugt wird auf ihre Verwendung vollständig verzichtet.

### Herstellung der Haftklebemassen

Die Herstellung und Verarbeitung der Haftklebemassen kann aus Lösung, Dispersion sowie aus der Schmelze erfolgen. Bevorzugte Herstell- und Verarbeitungsverfahren erfolgen aus Lösung sowie aus der Schmelze. Besonders bevorzugt ist die Fertigung der Klebmasse aus der Schmelze, wobei insbesondere Batchverfahren oder kontinuierliche Verfahren eingesetzt werden können. Besonders vorteilhaft ist die kontinuierliche Fertigung der Haftklebemassen mit Hilfe eines Extruders.

### Produktaufbau

Die Haftklebemassen werden sowohl für einschichtige durch dehnendes Verstrecken rückstands- und zerstörungsfrei wiederablösbare Selbstklebebänder (zum Beispiel entsprechend DE 33 31 016 C2 oder DE 42 22 849 C1 oder WO 98/03601 A1) als auch für mehrschichtige Selbstklebebänder ohne oder mit Schaumstoffzwischenträger (zum Beispiel entsprechend DE 197 08 366 A1, DE 198 20 858 A1, WO 92/11333 A1, DE 196 49 727 A1, DE 196 49 728 A1, DE 196 49 729 A1, DE 197 20 145 A1, US 5,516,581 A oder WO 95/06691 A1) verwendet.
Im Falle der Verwendung in mehrschichtigen Selbstklebebändern entsprechend DE 197 08 366 A1 können die Haftklebemassen sowohl die mittlere, innere Schicht als auch die äußeren Schichten der Klebestreifen bilden.
Werden die Klebmassen als äußere Schichten eingesetzt, können innen liegende Schichten wahlweise aus Klebemassen basierend auf im Elastomerblock gesättigten Styrolblockcopolymeren als auch auf Basis von im Elastomerblock ungesättigten Styrolblockcopolymeren aufgebaut sein. Im letzteren Fall enthalten die außen liegenden Haftklebstoffschichten typischerweise UV-Schutzmittel, zum Beispiel UV-Absorber, welche die UV-Belastung der innen liegenden Schichten reduzieren.
Ein Vorteil der Verwendung mehrschichtiger Produktaufbauten entsprechend DE 197 08 366 A1 besteht in der Möglichkeit, durch geeignete Rezeptierung der inneren Klebstoffschichten zum Beispiel die Stripkräfte weitestgehend unabhängig von den Klebeigenschaften zu steuern.
Vorgenannte schaumstoffzwischentrögerhaltige Produktaufbauten entsprechend DE 196 49 727 A1, DE 196 49 728 A1, DE 196 49 729 A1, DE 197 20 145 A1, US 5,516,581 A oder WO 95/06691 A1 sind ebenfalls geeignet, sind aber infolge der Lichtstreuung an den Schaumstoffporen nicht transparent. Klebestreifen können entsprechend DE 44 28 587 C2 und US 5,925,459 A ausgeformt beziehungsweise gemäß DE 44 31 914 C2 modifiziert sein. Die Haftklebemassen können ebenfalls in Produkten entsprechend DE 43 39 604 C2 genutzt werden.

### Beidseitig/einseitig haftklebrige Selbstklebebänder

Die Haftklebemassen werden sowohl für einseitig als auch für beidseitig haftklebrige durch dehnendes Verstrecken rückstandsfrei und zerstörungsfrei wiederablösbare Selbstklebebänder genutzt. Einseitig haftklebrige Selbstklebebänder können hierbei zum Beispiel durch einseitige Inertisierung oben genannter beidseitig haftklebriger Selbstklebebänder beziehungsweise Selbstklebestreifen erhalten sein.

### Konfektionierung

Typische Konfektionierformen von die Haftklebemassen nutzenden Selbstklebebändern sind Klebebandrollen sowie Klebestreifen, wie sie zum Beispiel in Form von Stanzlingen erhalten werden. Optional enthalten Stanzlinge einen nicht haftklebrigen Anfasserbereich, von welchem aus der Ablöseprozess ausgeführt werden kann.

Die hier beschriebenen Haftklebemassen werden für die Verwendung in durch dehnendes Verstrecken rückstands- und zerstörungsfrei wiederablösbaren Selbstklebebändern beziehungsweise Selbstklebestreifen genutzt infolge der hier beschriebenen Vorteile einer hohen Verklebungsfestigkeit bei gleichzeitig hoher Schälfestigkeit und einer sehr hohen Alterungsbeständigkeit, insbesondere einer sehr hohen UV-Beständigkeit. Sie werden auch in doppelseitig haftklebrigen Selbstklebebändern verwendet, welche für die permanente Fixierung konzipiert sind.

### Prüfmethoden

Messungen der Zugfestigkeit beziehungsweise der maximalen Dehnung erfolgten, wenn nicht anders vermerkt, in Anlehnung an DIN 53504 mit Verwendung von Schulterstäben der Größe S3 sowie bei einer Separationsgeschwindigkeit von 300 mm/min.

Zur Ermittlung der Ablösekraft (Stripkraft) wird eine Klebstofffolie der Abmessungen 50 mm x 20 mm (Länge x Breite) und mit einem am oberen Ende nicht haftklebrigen Anfasserbereich zwischen zwei Stahlplatten (deckungsgleich zueinander angeordnet) der Abmessungen 50 mm x 30 mm, entsprechend dem unter "Kippscherfestigkeit (Kippscherstandzeit)" beschriebenen Vorgehen, jedoch mit Anpressdrucken von jeweils 500 N verklebt. Die Stahlplatten tragen an ihrem unteren Ende je eine Bohrung zur Aufnahme eines S-förmigen Stahlhakens. Das untere Ende des Stahlhakens trägt eine weitere Stahlplatte, über welche die Prüfanordnung zur Messung in der unteren Klemmbacke einer Zugprüfmaschine fixiert werden kann. Die Verklebungen werden 24 h bei +40 °C gelagert. Nach Rekonditionierung auf Raumtemperatur wird der Klebfolienstreifen mit einer Zuggeschwindigkeit von 1000 mm/min parallel zur Verklebungsebene und kontaktfrei zu den Kantenbereichen der beiden Stahlplatten, herausgelöst. Dabei wird die erforderliche Ablösekraft in N gemessen. Angegeben wird der Mittelwert der Stripspannungswerte (in N/mm²), gemessen in dem Bereich, in welchem der Klebestreifen auf einer Verklebungslänge zwischen 10 mm und 40 mm von den Stahluntergründen abgelöst ist.

Zur Ermittlung der Schälfestigkeit werden die zu untersuchenden Haftktebestreifenmuster einseitig vollflächig mit einer 23 µm starken PET-Folie (Hostaphan RN 25; Mitsubishi Chemicals) luftblasenfrei einkaschiert, danach die zweite Klebfolienstreifenseite an einem Ende mit einem ca. 6 mm langen Folienstreifen (ebenfalls Hostaphan RN 25) abgedeckt, so dass an diesem Ende ein beidseitig nicht haftklebriger Anfasserbereich entsteht. Hiernach wird der zu prüfende Klebfolienstreifen vorderseitig mit leichtem Fingerandruck auf den Prüfuntergrund (gestrichene Raufasertapete: Tapete = Erfurt Körnung 52, Farbe = Herbol Zenit LG, Tapete verklebt auf Presspanplatte) aufgeklebt. Die Muster werden anschließend 10 s lang bei einem Anpressdruck von 90 N pro 10 cm² Haftklebefläche angedrückt, danach 15 Minuten bei 40 °C konditioniert. Die Prüfplatten werden anschließend horizontal fixiert, so dass der anfassbare Bereich der Klebestreifen nach unten gerichtet ist. An den nicht klebenden Anfasser wird mit Hilfe einer Klemme (20 g) ein Gewicht von 50 g befestigt, so dass die entstehende Schälbelastung (ca. 0,7 N pro 20 mm Klebestreifenbreite) orthogonal zur Verklebungsebene wirkt. Nach 15 Minuten und nach weiteren 24 h wird diejenige Strecke markiert, die der Klebestreifen vom Verklebungsuntergrund seit Versuchsbeginn abgeschält ist. Der Abstand zwischen beiden Markierungen wird als Schälweg (Einheit: mm pro 24 h) angegeben.

Zur Bestimmung der Kippscherfestigkeit wird die zu prüfende Klebstofffolie der Abmessung 20 mm x 50 mm, die an einem Ende beidseitig mit einem nicht haftklebrigen Anfasserbereich versehen ist (erhalten durch Aufkaschieren von 25 µm starker biaxial verstreckter Polyesterfolie der Abmessungen 20 mm x 13 mm (Hostaphan RN 25)), mittig auf eine hochglanzpolierte quadratische Stahlplatte der Abmessung 40 mm x 40 mm x 3 mm (Länge x Breite x Dicke) verklebt. Die Stahlplatte ist rückseitig mittig mit einem 10 cm langen Stahlstift versehen, welcher vertikal auf der Plattenfläche sitzt. Die erhaltenen Probekörper werden mit einer Kraft von 100 N auf den zu prüfenden Haftgrund (Stahl) verklebt (Andruckzeit = 5 sec) und 5 min im unbelasteten Zustand belassen. Nach Beaufschlagung der gewählten Kippscherbelastung durch Anhängen eines Gewichtes (20 N bei 50 mm Hebelarm) wird die Zeit bis zum Versagen der Verklebung (= Kippscherstandzeit) ermittelt. Das Testklima ist dabei 23 °C bei einer relativen Luftfeuchtigkeit von 50%.

Diese Testbedingungen entsprechen einer deutlichen Überlast, und zwar ca. einem 10 fachen Drehmoment gegenüber dem, das sich ergibt, wenn der übliche Anwender einen solchen Klebestreifen zu einem Verklebungszweck einsetzt. Eine solche Überlast ist unumgänglich, um in einer überschaubaren Zeit Unterschiede zwischen einzelnen Klebmassen finden zu können.

Um die UV-Beständigkeit zu testen, wurden jeweils 20 Klebestreifen der Abmessungen 20 mm x 50 mm, versehen mit einem Anfasser wie bei der Messungen der Stripspannung beschrieben, auf eine Glasplatte verklebt. Anschließend wurde der mit einer UVundurchlässigen Abdeckung versehene Anfasser aus der Klebfuge herausstehen lassend Papier der Abmessungen 40 mm x 40 mm auf den Klebestreifen geklebt und mit einer Kraft von 100 N angedrückt. Die Klebestreifen wurden dann 10 Tage in einem UV-Tester der Fa. Atlas so gelagert, dass das UV-Licht durch die Glasplatte auf den Klebestreifen fallen konnte. Die Bestrahlungsdosis lag bei 500 W/m², die Schwarzstandardtemperatur betrug 25 °C. Nach den 10 Tagen Lagerung wurden die Klebestreifen durch Ziehen gelöst, wobei in einem Winkel von 15° gezogen wurde. Notiert wurde die Anzahl der abgerissenen Klebestreifen.

### Herstellung der Prüfkörper

### Herstellung der Haftklebestreifen

Die Haftklebemassen wurden hierbei in einem heizbaren Kneter mit Sigma-Schaufel (Werner und Pfleiderer LUK 1,0 K3 ausgerüstet mit einem Thermostaten LTH 303 der Fa. mgw LAUDA) bei einer Temperatur von ca. +160 bis +180 °C und unter Inertisierung mit CO₂ als Schutzgas zu einer homogenen Mischung verarbeitet. Nach dem Erkalten wurden durch ca. 10-minütiges Verpressen der Klebmasse bei +120 °C bis +140 °C in einer temperierbaren Presse (Typ KHL 50 der Firma Bucher-Guyer) einschichtige Klebstoff-Folienstücke hergestellt. Die Dicke der Folien betrug für einen einschichtigen Aufbau 700 µm, für einen Mehrschichtaufbau für die Innenschicht 500 µm ± 50 µm und für die Außenschichten 100 µm ± 20 µm.

### Beispiele:

Im folgenden wird die Erfindung durch einige Beispiele näher erläutert, ohne die Erfindung damit einschränken zu wollen.

Allen Beispielen wurden als Alterungsschutzmittel 0,5 Teile lrganox 1010 und 0,5 Teile Tinuvin P als UV-Absorber zugesetzt.

### Vergleichsbeispiel 1:

Einschichtiger Aufbau (700 µm Dicke):

| | |
|---|---|
| 50 Teile | Kraton G 1650 |
| 50 Teile | Regalite R 1100 |

### Beispiel 2:

Einschichtiger Aufbau (700 µm Dicke):

| | |
|---|---|
| 25 Teile | Kraton G 1650 |
| 25 Teile | Tuftec P 1000 |
| 50 Teile | Regalite R 1100 |

### Vergleichsbeispiel 3:

Einschichtiger Aufbau (700 µm Dicke):

| | |
|---|---|
| 50 Teile | Vector 4211 |
| 50 Teile | Regalite R 1100 |

### Beispiel 4:

Einschichtiger Aufbau (700 µm Dicke):

| | |
|---|---|
| 25 Teile | Vector 4211 |
| 25 Teile | Tuftec P 1000 |
| 50 Teile | Regalite R 1100 |

### Beispiel 5:

### Mehrschichtaufbau:

Mittelschicht (500 µm)

| | |
|---|---|
| 50 Teile | Vector 4211 |
| 50 Teile | Regalite R 1100 |

Außenschichten (je 100 µm):

| | |
|---|---|
| 50 Teile | Tuftec P 1000 |
| 50 Teile | Regalite R 1100 |

Eigenschaften der eingesetzten Rohstoffe:

| | |
|---|---|
| Kraton G 1650 | SEBS, 100 Gew.-% 3-Block; Blockpolystyrolgehalt: ca. 30 Gew.-%; Kraton Polymers |
| Vector 4211 | SIS, > 95 Gew.-% 3-Block; Blockpolystyrolgehalt: 30 Gew.-%; Exxon Chemical |
| Tuftec P 1000 | SBBS (Styrol-Butadien-Butylen-Styrol), ca. 35 Gew.-% 3-Block, ca. 65 Gew.-% 2-Block; Blockpolystyrolgehalt: ca. 30 Gew.-%, Asahi Kasei |
| Regalite R 1100 | Hydriertes Aromatenharz; Erweichungstemperatur (Ring & Ball): ca. +99°C; Eastman |
| Irganox 1010 | sterisch gehindertes Phenol; Ciba Additive |
| Tinuvin P | UV-Absorber, Ciba Additive |

Bei den beispielhaften Haftklebestreifen wurden die folgenden mechanischen und klebtechnischen Daten ermittelt:

| Haftklebemasse Beispiel Nr. | Zugfestigkeit in MPa // Dehnung in % | Strip-Spannung in MPa | Schälgeschwindigkeit in mm/24 h | Kippscherstandzeit in Tagen | Anzahl Reißer im UV-Test |
|---|---|---|---|---|---|
| 1 | 10,2 // 740 | 1,5 | 60 | 1 | 0 |
| 2 | 9,4 // 960 | 1,3 | 24 | 32 | 2 |
| 3 | 12,7 // 1220 | 1,7 | 7 | 58 | 18 |
| 4 | 11,5 // 1180 | 1,5 | 9 | 42 | 8 |
| 5 | 10,5 // 1210 | 1,6 | 6 | 50 | 1 |

Der Einsatz von SBBS (Styrol-Butadien-Butylen-Styrol) führt zu einer Verbesserung der Klebeigenschaften, wenn es mit hydriertem SEBS abgemischt wird. Wie aus Beispiel 2 zu erkennen ist, nimmt die Zugfestigkeit nur geringfügig ab, die UV-Beständigkeit bleibt erhalten. In einer Mischung von SBBS und SBS wird bei einer geringfügigen Verschlechterung der Klebfestigkeiten die UV-Stabilität deutlich erhöht. Idealerweise werden Mehrschichtaufbauten gewählt, bei denen in der Außenschicht SBBS verwendet wird. Die Kombination aus Klebleistung und UV-Beständigkeit ist dann optimiert.

## Patentansprüche

1. Verwendung einer Klebemasse in einem Haftklebfollenstreifen aus mindestens einer Schicht, der sich durch dehnendes Verstrecken im wesentlichen in der Verklebungsebene rückstands- und zerstörungsfrei wieder ablösen lässt,
wobei die Klebmasse besteht aus
mindestens einem Blockcopolymer mit ein oder zwei endständigen Blöcken, bestehend aus Vinylaromaten, und
einem Block bestehend aus einem konjugierten Dien, bei dem der Anteil an 1,2-verknüpftem Dien selektiv hydriert ist, enthält

2. Verwendung nach Anspruch 1,
**gekennzeichnet durch** einen Anteil von 20 bis 70 Gew.-%, bevorzugt von 30 bis 60 Gew.-%, ganz besonders bevorzugt von 35 bis 55 Gew.-%, Styrolblockcopolymer bezogen auf die gesamte Klebmasse.

3. Verwendung nach Anspruch 1 oder 2, **dadurch gekennzeichnet, dass**
es sich bei den Vinylaromaten um insbesondere teilhydrierte Styrol-Isopren-Styrol-Blockcopolymere, Styrol-Butadien-Styrol-Blockcopolymere oder einer Mischung aus beiden handelt.

4. Verwendung nach zumindest einem der Ansprüche 1 bis 3, **dadurch gekennzeichnet, dass**
die Klebmasse im Elastomerblock vollständig hydrierte Styrolblockcopolymere auf der Basis von Styrol-Ethylen/Butylen-Styrol und/oder Styrol-Ethylen/Propylen-Styrol enthält.

5. Verwendung nach zumindest einem der vorhergehenden Ansprüche, **dadurch gekennzeichnet, dass**
die Styrolblockcopolymere funktionalisiert sind, insbesondere maleinsäureanhydridmodizifizert, silanmodifiziert oder epoxidiert.

6. Verwendung nach zumindest einem der vorhergehenden Ansprüche, **dadurch gekennzeichnet, dass**
die Blockcopolymere Polystyrolendblöcke besitzen.

7. Verwendung nach zumindest einem der vorhergehenden Ansprüche, **dadurch gekennzeichnet, dass**
die Blockcopolymere einen Polyvinylaromatenanteil von 10 Gew.-% bis 35 Gew.-%, bevorzugt zwischen 15 Gew.-% und 32 Gew.-% besitzen.

8. Verwendung nach zumindest einem der vorhergehenden Ansprüche, **dadurch gekennzeichnet, dass**
die Klebmasse neben den Elastomeren Klebharze enthält.

9. Verwendung nach zumindest einem der vorhergehenden Ansprüche, **dadurch gekennzeichnet, dass**
die Klebemasse weitere Abmischkomponenten enthält, insbesondere Weichmacher, Alterungsschutzmittel, Verarbeitungshilfsmittel, Füllstoffe, Farbstoffe, optische Aufheller, Stabilisatoren, Endblockverstärkerharze.

10. Verwendung einer Klebemasse nach zumindest einem der vorherigen Ansprüche in einem Haftklebfolienstreifen, der sich durch dehnendes Verstrecken im wesentlichen in der Verklebungsebene rückstands- und zerstörungsfrei wieder ablösen lässt, wobei der Klebfolienstreifen aus mehreren, insbesondere zwei oder drei Schichten besteht.

11. Verwendung nach einem der Ansprüche 1 oder 10, **dadurch gekennzeichnet, dass** der Klebfolienstreifen einen Schaumstoffzwischenträger enthält.

## Claims

1. Use of an adhesive in a pressure sensitive adhesive sheet strip which comprises at least one layer and is residuelessly and nondestructively redetachable by extensive stretching substantially in the bond plane, said adhesive being composed of at least one block copolymer having one or two end blocks composed of vinylaromatics, and
a block composed of a conjugated diene, wherein the fraction of 1,2-linked diene is selectively hydrogenated.

2. Use according to Claim 1, **characterized by** a fraction of from 20 to 70% by weight, preferably from 30 to 60% by weight, very preferably from 35 to 55% by weight, of styrene block copolymer relative to the total adhesive.

3. Use according to Claim 1 or 2, **characterized in that** the vinylaromatics are in particular partly hydrogenated styrene-isoprene-styrene block copolymers, styrene-butadiene-styrene block copolymers or a mixture of the two.

4. Use according to at least one of Claims 1 to 3, **characterized in that** the adhesive comprises styrene block copolymers which are completely hydrogenated in the elastomer block and are based on styrene-ethylene/butylene-styrene and/or styrene-ethylene/propylene-styrene.

5. Use according to at least one of the preceding claims, **characterized in that** the styrene block copolymers are functionalized, in particular maleic anhydride-modified, silane-modified or epoxidized.

6. Use according to at least one of the preceding claims, **characterized in that** the block copolymers possess polystyrene endblocks.

7. Use according to at least one of the preceding claims, **characterized in that** the block copolymers possess a polyvinylaromatics fraction of from 10% by weight to 35% by weight, preferably between 15% by weight and 32% by weight.

8. Use according to at least one of the preceding claims, **characterized in that** the adhesive comprises tackifier resins as well as the elastomers.

9. Use according to at least one of the preceding claims, **characterized in that** the adhesive comprises further blend components, especially plasticizers, ageing inhibitors, processing assistants, fillers, dyes, optical brighteners, stabilizers, and endblock reinforcer resins.

10. Use of an adhesive according to at least one of the preceding claims in a pressure sensitive adhesive sheet strip which is residuelessly and nondestructively redetachable by extensive stretching substantially in the bond plane, the adhesive sheet strip being composed of two or more layers, in particular two or three layers.

11. Use according to either of Claims 1 and 10, **characterized in that** the adhesive sheet strip includes an intermediate foam carrier.

## Revendications

1. Utilisation d'une masse adhésive dans une bande de feuille autoadhésive constituée par au moins une couche, qui peut être redétachée par un étirement avec allongement essentiellement dans le plan de collage, sans résidus ni dégradation, la masse adhésive étant constituée par
au moins un copolymère à blocs avec un ou deux blocs en position terminale constitués par des aromatiques de vinyle, et
un bloc constitué par un diène conjugué dans lequel la proportion de diène lié en 1,2 est hydrogénée sélectivement.

2. Utilisation selon la revendication 1, **caractérisée par** une proportion de 20 à 70% en poids, de préférence de 30 à 60% en poids, de manière tout particulièrement préférée de 35 à 55% en poids, de copolymère à blocs de styrène, par rapport à la masse adhésive totale.

3. Utilisation selon la revendication 1 ou 2, **caractérisée en ce qu'**il s'agit, pour les aromatiques de vinyle, de copolymères à blocs de styrène-isoprène-styrène, de copolymères à blocs de styrène-butadiène-styrène, en particulier partiellement hydrogénés ou d'un mélange des deux.

4. Utilisation selon au moins l'une quelconque des revendications 1 à 3, **caractérisée en ce que** la masse adhésive contient dans le bloc élastomère des copolymères à blocs de styrène totalement hydrogénés à base de styrène-éthylène/butylène-styrène et/ou de styrène-éthylène/propylène-styrène.

5. Utilisation selon au moins l'une quelconque des revendications précédentes, **caractérisée en ce que** les copolymères à blocs de styrène sont fonctionnalisés, en particulier modifiés par un anhydride de l'acide maléique, modifiés par un silane ou époxydés.

6. Utilisation selon au moins l'une quelconque des revendications précédentes, **caractérisée en ce que** les copolymères à blocs présentent des blocs terminaux de polystyrène.

7. Utilisation selon au moins l'une quelconque des revendications précédentes, **caractérisée en ce que** les copolymères à blocs présentent une proportion d'aromatique de vinyle de 10% en poids à 35% en poids, de préférence entre 15% en poids et 32% en poids.

8. Utilisation selon au moins l'une quelconque des revendications précédentes, **caractérisée en ce que** la masse adhésive contient des résines adhésives en plus des élastomères.

9. Utilisation selon au moins l'une quelconque des revendications précédentes, **caractérisée en ce que** la masse adhésive contient d'autres composants dans le mélange, en particulier des plastifiants, des agents de protection contre le vieillissement, des adjuvants de transformation, des charges, des colorants, des azurants optiques, des stabilisateurs, des résines de renforcement des blocs terminaux.

10. Utilisation d'une masse adhésive selon l'une ou plusieurs des revendications précédentes dans une bande de feuille autoadhésive qui peut être à nouveau redétachée par un étirement avec allongement essentiellement dans le plan de collage sans résidus ni dégradation, la bande de feuille adhésive étant constituée par plusieurs, en particulier deux ou trois couches.

11. Utilisation selon l'une quelconque des revendications 1 à 10, **caractérisée en ce que** la bande de feuille adhésive contient un support intermédiaire en mousse.
